# EUROPÄISCHE PATENTANMELDUNG

(11) **EP 1 579 952 A1**
(43) Veröffentlichungstag der Anmeldung: **28.09.2005**
(21) Anmeldenummer: 04007205.0
(22) Anmeldetag: 25.03.2004
(51) Int. Cl.: B23Q 5/58, H02H 7/09, F16P 3/14

(54) **Maschine mit Drehstrommotor**

(71) Anmelder: Arnz "Flott" GmbH, 42857 Remscheid (DE)
(72) Erfinder: Esselborn, Wolfgang, 42929 Wermelskirchen (DE); Henkes, Dirk, 42857 Remscheid (DE); Höhn, Edgar, 42781 Haan (DE)
(74) Vertreter: Priebisch, Rüdiger

(57) **Zusammenfassung**

Maschine (1), die mit mindestens einem Drehstrommotor (2) betrieben wird, dessen Spannungsversorgung im Störfall von einem über Funk betätigbaren Notschalter (4) unterbrechbar ist.

Um das Sicherheitsniveau der Maschine (1) wesentlich zu erhöhen, wir vorgesehen, daß in die Spannungsversorgung sowohl eine Vorrichtung zur Drehfeldüberwachung (9) als auch eine Vorrichtung zur Phasenausfallerkennung mit Wiederanlaufschutz (10) geschaltet ist.

## Beschreibung

Die Erfindung bezieht sich auf eine Maschine, die mit mindestens einem Drehstrommotor betrieben wird, dessen Spannungsversorgung im Störfall von einem über Funk betätigbaren Notschalter unterbrechbar ist.

Eine derartige Maschine ist als Bohrmaschine aus der Deutschen Gebrauchsmusterschrift 203 00 219 bekannt. Durch Anordnung eines über Funk betätigten Notschalters kann ein Maschinenbediener, sobald er z. B. optisch oder akustisch auf einen Störfall aufmerksam gemacht wird, auch aus einer größeren Entfernung zur Maschine den Notschalter ohne Zeitverzögerung auslösen und die Verbindung zur Spannungsversorgung trennen. Damit kann im akuten Notfall weiterer Schaden für Mensch, Maschine und Umwelt vermieden werden.

Drehstrommotoren von Maschinen, wie z. B. Werkzeugmaschinen, müssen oft als in eine bestimmte Drehrichtung betrieben werden. Um diese Drehrichtung sicher zu stellen, sind z. B. bei Drehstromsteckdosen die einzelnen Klemmen entsprechend den Phasen mit R, S und T gekennzeichnet und vorschriftsmäßig immer im Rechtsdrehfeld angeschlossen. Diese Vorschrift wird jedoch nicht immer und überall eingehalten. Wenn aber durch eine Verpolung eine Drehstromsteckdose falsch angeschlossen ist, dann wird der Drehstrommotor in die entgegengesetzte Drehrichtung betrieben. Somit läuft das angetriebene Werkzeug in der falschen Drehrichtung, was zu sehr unfallträchtigen Situationen führen kann: Beispielsweise kann ein sich falsch drehendes Kreissägeblatt zum Wegschleudern des zu sägenden Werkstücks und damit nicht nur zur Beschädigung des Werkzeugs und Werkstücks, sondern auch zu schweren Verletzungen des Maschinenbedieners oder anderer in der Nähe weilender Personen führen.

Ähnliche Folgen können an anderen falsch angetriebenen Maschinen auftreten. Die Gefahr einer Verpolung erhöht sich zudem, wenn die Maschine transportabel ist und z. B. auf mehreren Baustellen an verschiedenen Stromnetzen über Steckdosen in Betrieb genommen wird.

In einem Drehstromnetz werden die drei Phasen durch einzelne Sicherungen geschützt. Löst eine der Sicherungen durch Überlastung aus, so wird evtl. ein Drehstrommotor an zwei Phasen betrieben. Das kann zu einer Überhitzung seiner Motorwicklung und sogar zur Zerstörung des Drehstrommotors führen.

Schließlich besteht bei gefährlichen, elektrisch betriebenen Maschinen die Forderung, daß nach einem beliebigen Netzausfall die Maschine bei Spannungswiederkehr nicht selbsttätig wieder anläuft. Denn ein unkontrolliertes oder unverhofftes Anfahren einer Werkzeugmaschine kann ebenfalls zu schweren Unfällen führen. Daher sind derartige Maschinen mit einem sog. Wiederanlaufschutz ausgerüstet.

In Anbetracht der geschilderten, vielfältigen Unfallgefahren liegt der Erfindung das Bestreben zugrunde, bei einer mit Drehstrommotor arbeitenden Maschine der eingangs genannten Art das Sicherheitsniveau wesentlich zu erhöhen.

Hierzu geht die Erfindung grundsätzlich schon aus von einer Maschine, wie z. B. Bohrmaschine, die mit mindestens einem Drehstrommotor betrieben wird, dessen Spannungsversorgung im Störfall von einem über Funk betätigbaren Notschalter unterbrechbar ist, und schlägt jedoch zusätzlich vor, daß in die Spannungsversorgung sowohl eine Vorrichtung zur Drehfeldüberwachung als auch eine Vorrichtung zur Phasenausfallerkennung mit Wiederanlaufschutz geschaltet ist.

Damit ist sichergestellt, daß die Maschine nicht nur bei einer bemerkbaren Notsituation aus der Entfernung abgeschaltet wird. Vielmehr werden auch weitere, insbesondere auch für den Bediener gar nicht erkennbare Gefahrenpotentiale sicher ausgeschaltet, so daß die erfindungsgemäße Ausbildung zu einem sehr hohen Sicherheitsstandard der Maschine führt. Wird die Maschine z. B. in einer bezüglich der Sicherheitsvorschriften oder der Spannungsversorgung unterentwickelten Region eingesetzt, so wird der Bediener dennoch weitgehend gegen solche Unfälle geschützt, die durch Montage- oder Netzfehler bedingt sind.

Um die vielfältigen Sicherungsfunktionen in kompakter Form zu realisieren, wird insbesondere vorgesehen, daß der über Funk betätigbare Notschalter, die Vorrichtung zur Drehfeldüberwachung und die Vorrichtung zur Phasenausfallerkennung mit Wiederanlaufschutz zu einer Baueinheit zusammengefaßt sind. Eine solche Baueinheit kann insbesondere in einem Gehäuse klein bauend untergebracht und damit preisgünstig hergestellt und bequem eingesetzt werden.

Ist an der Maschine schon ein handbetätigbarer Notschalter vorhanden, der wahlweise auch über Funk betätigbar ist, dann ergibt sich eine besonders kompakte Ausbildung, wenn der handbetätigbare Notschalter, der wahlweise über Funk betätigbare Notschalter, die Vorrichtung zur Drehfeldüberwachung und die Vorrichtung zur Phasenausfallerkennung mit Wiederanlaufschutz zu einer Baueinheit zusammengefaßt sind.

In beiden vorgenannten Fällen kann eine weitere Raumreduzierung erzielt werden, wenn der handbetätigbare Notschalter und / oder der über Funk betätigbare Notschalter, die Vorrichtung zur Drehfeldüberwachung und die Vorrichtung zur Phasenausfallerkennung mit Wiederanlaufschutz auf dasselbe Betätigungsglied oder Schaltglied einwirken.

Die Baueinheit kann in die Maschine selbst eingebaut werden, indem sie z. B. in oder hinter einem relativ voluminösen Betätigungsknopf eines handbetätigten Notschalters untergebracht wird. Dann benötigt sie keinen oder zumindest kaum zusätzlichen Raum, ist daher auch gut nachrüstbar und zudem für Bedienung, Reparatur oder Austausch leicht zugänglich.

Ist die Maschine über eine Anschlußleitung an eine ortsfeste Anschlußdose anschließbar, bietet sich an, daß die Baueinheit in der Anschlußleitung, und dort insbesondere integriert in einer Anschlußbox, angeordnet wird. Hierdurch kann die Maschine ohne jeglichen Eingriff in die Maschine selbst, und damit besonders schnell und preisgünstig, nachgerüstet werden. Außerdem läßt sich hier die Baueinheit besonders leicht austauschen.

In der Zeichnung sind zwei Ausführungsbeispiele der Erfindung dargestellt, die nun näher beschrieben werden.
Fig. 1 zeigt in schematischer Anordnung eine erste Ausführung der Erfindung, nämlich eine Werkzeugmaschine mit einer integrierten Baueinheit.
Fig. 2 zeigt in schematischer Anordnung eine zweite Ausführung der Erfindung, nämlich eine Werkzeugmaschine mit einer in ihrer Anschlußleitung integrierten Anschlußbox.

Die Werkzeugmaschine 1 ist als Bohrmaschine ausgebildet. Ihr das Werkzeug antreibende Drehstrommotor 2 ist über eine Anschlußleitung 3 und einen Anschlußstecker 3a mit einer Steckdose 3b verbindbar, die zur Spannungsversorgung an ein Drehstromnetz mit 400 Volt Spannung angeschlossen ist.

Zwischen dem Drehstrommotor 2 und der Anschlußleitung 3 kann ein nicht dargestellter üblicher Betriebsschalter angeordnet sein. Zusätzlich ist in Serie hierzu ein handbetätigter Notschalter 4 angebracht. Der Notschalter umfaßt einen Betätigungsknopf 5, der zur guten Sichtbarkeit und bequemen Bedienung relativ voluminös ausgebildet ist und auf ein Schaltglied 6 nach Art eines Unterbrechers einwirken kann.

Innerhalb des Betätigungsknopfes 5 ist ein Funkempfänger 7 angeordnet, der ein Betätigungsglied 8 steuert, das ebenfalls auf das Schaltglied 6 einwirkt. Parallel zum Notschalter 4 sind eine Vorrichtung 9 zur Drehfeldüberwachung und eine Vorrichtung 10 zur Phasenausfallerkennung mit Wiederanlaufschutz angeordnet. Notschalter 4, Betätigungsknopf 5, Schaltglied 6, Funkempfänger 7, Betätigungsglied 8, Vorrichtung 9 und Vorrichtung 10 sind zu einer Baueinheit 11 zusammengefaßt, die in den für den Notschalter 4 an der Werkzeugmaschine 1 vorgesehenen Montageschacht eingesetzt ist.

Zur Steuerung des Betätigungsglieds 8 über den Funkempfänger 7 ist ein kleiner transportabler Handsender 12 vorgesehen.

Die Spannungsversorgung der Werkzeugmaschine 1 wird nun in mehrfacher Weise überwacht:

Im akuten, unfallträchtigen Störfall, z. B. mechanischer Art, kann sowohl durch Drücken des Betätigungsknopfes 5 als auch durch ein von Handsender 12 ausgelöstes Funksignal das Schaltglied 6 unterbrochen werden: Beides Mal wird in der Baueinheit 11, entweder von Hand über den Betätigungsknopf 5 oder per Funk über den Funkempfänger 7 und das Betätigungsglied 8, auf das Schaltglied 6 eingewirkt.

Sollte die Werkzeugmaschine 1 über die Anschlußleitung 3 und den Anschlußstecker 3a an ein unzulässiges Linksdrehfeld angeschlossen werden, weil nämlich die Steckdose 3b an die Spannungsversorgung falsch angeschlossen wurde, so reagiert die Vorrichtung 9 und bewirkt über das Betätigungsglied 8 die Trennung des Schaltglieds 6.

Sollte eine der drei Phasen der Anschlußleitung 3 bzw. Anschlußsteckers 3a bzw. der Steckdose 3b aus beliebigem Grund ausgefallen sein, so reagiert die Vorrichtung 10 und bewirkt über das Betätigungsglied 8 die Trennung des Schaltglieds 6. Gleichzeitig verhindert sie ein selbsttätiges Wiederanlaufen, falls die Spannungsversorgung plötzlich wieder vorhanden ist.

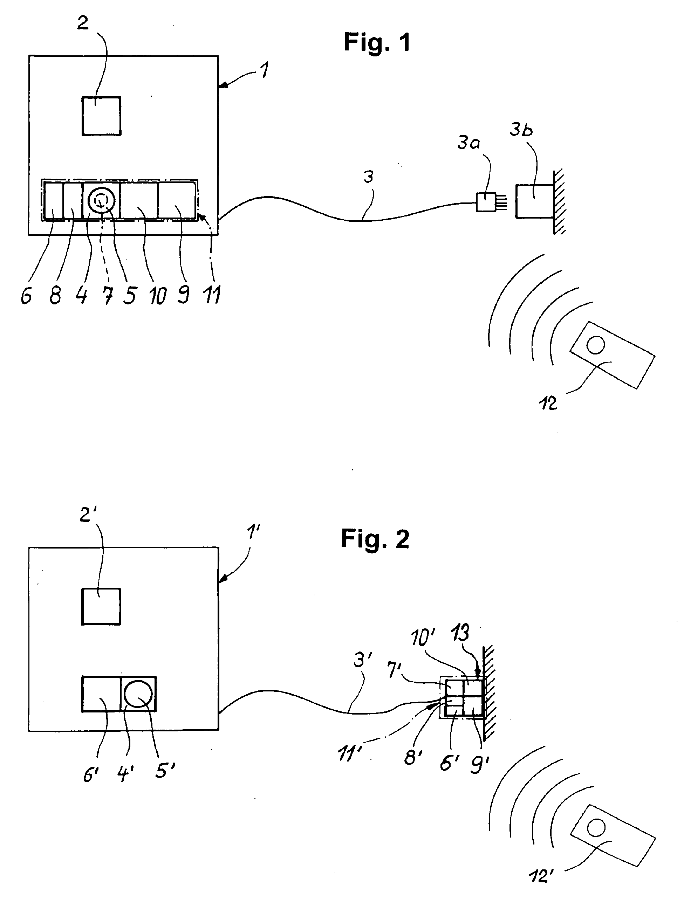

Eine nachrüstbare Variante der Erfindung ist in der Fig. 2 dargestellt. Gleiche Bauteile sind mit gleichen, jedoch mit einem Index versehenen Bezugszeichen versehen.

Hier wird von einer Werkzeugmaschine 1' nach dem Stand der Technik ausgegangen, die auch einen handbetätigten Notschalter 4' umfassen kann. Auch hier ist die Werkzeugmaschine 1' über eine mit einer Anschlußbox 13 versehene Anschlußleitung 3' und eine Steckdose 3b' an ein Drehstromnetz mit 400 Volt Spannung angeschlossen.

In der Anschlußbox 13 sind ein Funkempfänger 7', eine Vorrichtung 9' zur Drehfeldüberwachung, eine Vorrichtung 10' zur Phasenausfallerkennung mit Wiederanlaufschutz und ein gemeinsames Schaltglied 6' mit Betätigungsglied 8' zu einer kompakten Baueinheit 11' zusammengefaßt, um die Spannungsversorgung zum oben erläuterten Zweck schon innerhalb der Anschlußbox 13 zu unterbrechen. Zur Funksteuerung ist ein Handsender 12' bestimmt.

Zur Nachrüstung einer Werkzeugmaschine braucht eine vorhandene Anschlußleitung 3' nur mit einer die Baueinheit 11' umfassenden Anschlußbox 13 versehen zu werden, um die vielfältigen, oben genannten Funktionen zu nutzen.

### Bezugszeichen

- 1: Werkzeugmaschine
- 1': Werkzeugmaschine
- 2: Drehstrommotor
- 2': Drehstrommotor
- 3: Anschlußleitung
- 3': Anschlußleitung
- 3a: Anschlußstecker
- 3b: Steckdose
- 4: handbetätigbarer Notschalter
- 4': handbetätigbarer Notschalter
- 5: Betätigungsknopf
- 5': Betätigungsknopf
- 6: Schaltglied
- 6': Schaltglied
- 7: Funkempfänger
- 7': Funkempfänger
- 8: Betätigungsglied
- 8': Betätigungsglied
- 9: Vorrichtung zur Drehfeldüberwachung
- 9': Vorrichtung zur Drehfeldüberwachung
- 10: Vorrichtung zur Phasenausfallerkennung
- 10': Vorrichtung zur Phasenausfallerkennung
- 11: Baueinheit
- 11': Baueinheit
- 12: Handsender
- 12': Handsender
- 13: Anschlußbox

## Patentansprüche

1. Maschine (1), die mit mindestens einem Drehstrommotor (2) betrieben wird, dessen Spannungsversorgung im Störfall von einem über Funk betätigbaren Notschalter (4) unterbrechbar ist, **dadurch gekennzeichnet, daß** in die Spannungsversorgung sowohl eine Vorrichtung zur Drehfeldüberwachung (9) als auch eine Vorrichtung zur Phasenausfallerkennung mit Wiederanlaufschutz (10) geschaltet ist.

2. Maschine nach Anspruch 1, **dadurch gekennzeichnet, daß** der über Funk betätigbare Notschalter (4), die Vorrichtung zur Drehfeldüberwachung (9) und die Vorrichtung zur Phasenausfallerkennung mit Wiederanlaufschutz (10) zu einer Baueinheit (11) zusammengefaßt sind.

3. Maschine nach Anspruch 2 mit einem an der Maschine (1) angeordneten, handbetätigbaren und wahlweise auch über Funk (7, 8, 12) betätigbaren Notschalter (4), **dadurch gekennzeichnet, daß** der handbetätigbare und wahlweise auch über Funk (7, 8, 12) betätigbare Notschalter (4), die Vorrichtung zur Drehfeldüberwachung (9) und die Vorrichtung zur Phasenausfallerkennung mit Wiederanlaufschutz (10) zu einer Baueinheit (11) zusammengefaßt sind.

4. Maschine nach Anspruch 2 oder 3, **dadurch gekennzeichnet, daß** der handbetätigbare Notschalter (4) und / oder der über Funk betätigbare Notschalter (7, 8, 12), die Vorrichtung zur Drehfeldüberwachung (9) und die Vorrichtung zur Phasenausfallerkennung mit Wiederanlaufschutz (10) auf dasselbe Schaltglied (6) oder Betätigungsglied (8) einwirken.

5. Maschine nach Anspruch 3 oder 4, **dadurch gekennzeichnet, daß** die Baueinheit (11) in oder hinter einem Betätigungsknopf (5) des handbetätigten Notschalters (4) untergebracht ist.

6. Maschine nach Anspruch 2, die mit einer Anschlußleitung (3') an die Spannungsversorgung anschließbar ist, **dadurch gekennzeichnet, daß** die Baueinheit (11') in der Anschlußleitung (3') angeordnet ist.

7. Maschine nach Anspruch 6, **dadurch gekennzeichnet, daß** die Baueinheit (11') in einer Anschlußbox (13) angeordnet ist.

## Geänderte Patentansprüche

### Geänderte Patentansprüche gemäss Regel 86(2) EPÜ.

**1.** Maschine (1), die mit mindestens einem Drehstrommotor (2) betrieben wird, dessen Spannungsversorgung im Störfall von einem über Funk betätigbaren Notschalter (4) unterbrechbar ist, **dadurch gekennzeichnet, daß** in die Spannungsversorgung sowohl eine Vorrichtung zur Drehfeldüberwachung (9) als auch eine Vorrichtung zur Phasenausfallerkennung mit Wiederanlaufschutz (10) geschaltet ist und daß der über Funk betätigbare Notschalter (4), die Vorrichtung zur Drehfeldüberwachung (9) und die Vorrichtung zur Phasenausfallerkennung mit Wiederanlaufschutz (10) zu einer Baueinheit (11) zusammengefaßt sind.

**2.** Maschine nach Anspruch 1 mit einem an der Maschine (1) angeordneten, handbetätigbaren und wahlweise auch über Funk (7, 8, 12) betätigbaren Notschalter (4), **dadurch gekennzeichnet, daß** der handbetätigbare und wahlweise auch über Funk (7, 8, 12) betätigbare Notschalter (4), die Vorrichtung zur Drehfeldüberwachung (9) und die Vorrichtung zur Phasenausfallerkennung mit Wiederanlaufschutz (10) zu einer Baueinheit (11) zusammengefaßt sind.

**3.** Maschine nach Anspruch 1 oder 2, **dadurch gekennzeichnet, daß** der handbetätigbare Notschalter (4) und / oder der über Funk betätigbare Notschalter (7, 8, 12), die Vorrichtung zur Drehfeldüberwachung (9) und die Vorrichtung zur Phasenausfallerkennung mit Wiederanlaufschutz (10) auf dasselbe Schaltglied (6) oder Betätigungsglied (8) einwirken.

**4.** Maschine nach Anspruch 2 oder 3, **dadurch gekennzeichnet, daß** die Baueinheit (11) in oder hinter einem Betätigungsknopf (5) des handbetätigten Notschalters (4) untergebracht ist.

**5.** Maschine nach Anspruch 1, die mit einer Anschlußleitung (3') an die Spannungsversorgung anschließbar ist, **dadurch gekennzeichnet, daß** die Baueinheit (11') in der Anschlußleitung (3') angeordnet ist.

**6.** Maschine nach Anspruch 5, **dadurch gekennzeichnet, daß** die Baueinheit (11') in einer Anschlußbox (13) angeordnet ist.
